# EUROPEAN PATENT SPECIFICATION

(11) **EP 0 712 189 B1**
(45) Date of publication and mention of the grant of the patent: **30.09.1998**
(21) Application number: 94203272.3
(22) Date of filing: 10.11.1994
(51) Int. Cl.: H02G 3/06

(54) **Raceway system composed of parts such as raceway elements and fittings for horizontal and vertical branches for accommodating cables, leads and the like**
Kanalsystem aus Teilen wie Kanäle und Kupplungen für horizontale und vertikale Verzweigungen von Kabeln, Drähten oder dergleichen
Système de canalisations composé d'éléments tels que canalisations et éléments de liaison pour branches horizontales et verticales pour câbles, fils ou similaires

(43) Date of publication of application: 15.05.1996
(73) Proprietor: STAGO B.V., NL-1627 LB Hoorn (NL)
(72) Inventor: Groot, Cornelis, NL-1624 VC Hoorn (NL); Niejenhuis, Lambert, NL-1619 AS Andijk (NL)
(74) Representative: Smulders, Theodorus A.H.J., Ir.

(56) References cited:
- EP-A- 0 315 023
- EP-A- 0 578 459
- WO-A-93/07665

## Description

The invention relates to a raceway system composed of parts such as raceway elements and fittings for horizontal and vertical branches for accommodating cables, leads and the like, in which the parts are manufactured from a single sheet and comprise at least one bottom surface and at least one side surface adjoining the bottom surface.

Such raceway systems are known from W093/07665 and are used in buildings for accommodating power cables and leads.

Both the raceway elements and the various fittings are manufactured in a limited number of pressing and cutting operations, whereafter the side surfaces are bent over substantially 90° by machine labour at the manufacturing site to form the side walls. The elements are stored and transported in this shape, which makes the required space considerable.

The object of the invention is to provide a raceway system of the above type which limits the required space for storage and transportation and facilitates the handling of the element and fittings at the site of installation.

This object is, according to the invention, achieved by providing a raceway system in which the parts are substantially flat and comprise a weakened portion on the bending line between the bottom surface and a side surface, so that the side surfaces are manually bendable to form a raceway element or a fitting.

In this way the products can be properly stacked and occupy only a minimal amount of space during storage and transport from the factory to the site of assembly. At that site the installation-mechanic can simply bend the elements to obtain the required form.

It is already known from EP-A-0 578 459 to provide raceway elements with weakened portions, consisting of perforations, so as to make the element manually bendable at the installation site. These weakened portions are however provided along bending lines, which are directed transversally towards the side surfaces, which have been bent previously by machine labour.

The weakened portions allow the bending of the raceway element or riser into a desired, multi-inclined form.

Preferably, the weakened portion is designed in the form of a groove or incision. As a consequence, the location of the weakened portion is unequivocally defined and the sidewalls are bent along a straight line. The weakened portion may also consist of perforations in the form of cuts, the material on one side adjacent a cut being recessed. These recessed portions can be provided both in the bottom surface and in the side surface. Because these recessed portions eventually abut against the bottom or side surface, the side surface can be bent through an angle of exactly 90°, whereby the cuts are sealed.

The invention also relates to a part intended as a fitting for horizontal and vertical branches of a raceway system, in which the bottom surface of the fitting comprises a lowered supporting edge at the points where, in the bent condition, a raceway element can be connected, as known per se from the above mentioned W093/07665 and EP-A-0 578 459. By virtue of this lowered supporting edge the rigidity of the bottom surface is increased considerably. In addition, the bottoms of a connected raceway element and a fitting are flush with each other, so that the bottom of a raceway system is level and continuous.

The bottom surface of such part comprises an inwardly protecting recess or ridge, adjacent and parallel to the lowered supporting edge. Thus, in case of coarse burr formation at the terminal edge of a sawn-off raceway element, the cables are not damaged.

The part intended as a fitting is of such design that a side surface is provided with at least one coupling surface, connected thereto by a weakened portion so as to make the coupling surface manually bendable along a bending line, as known per se from W093/07665 and EP-A-0 578 459, said weakened portion being a groove or incision or consisting of perforations in the form of cuts, the material on one side of the cuts being recessed.

In an advantageous embodiment of such fitting the coupling surfaces are provided with an inwardly projecting recess adjacent to and parallel to the bending or transistion line with the side surface. As a result, the cables in the raceway are kept at some distance from the terminal edge of a connected raceway element and so cannot be damaged by the often rough terminal edge of a sawn-off raceway element. In addition the recessed portions provide a better guidance of the cables around the corner, which is especially of importance when pulling cables in the raceway.

The invention is further related to a part intended as an end partition for horizontal and vertical branches of a raceway system, in which the lower edge of the coupling surfaces is bent slightly and the upper edge is bent 90°. Advantageously the upper edge and/or the lower edge are provided with a serration. By virtue of the serration, the coupling surfaces are clamped in the flanged edge of a raceway element and against the bottom of a raceway element.

Some exemplary embodiments of fittings of a raceway system according to the invention are further elucidated below with reference to the drawings. In the drawings:
Fig. 1 is a three-dimensional elevation of a four-way junction according to the invention in the flat condition;
Fig. 2 is a four-way junction according to Fig. 1, with the side surfaces disposed in the bent condition;
Fig. 3 is a three-dimensional elevation of a corner piece according to the invention, with two side surfaces disposed in the bent condition and interconnected by means of a snap connection;
Fig. 4 is a three-dimensional elevation of an end partition according to the invention; and
Fig. 5 is a detail of an alternative embodiment for joining two side surfaces to each other by means of a foldable connection.

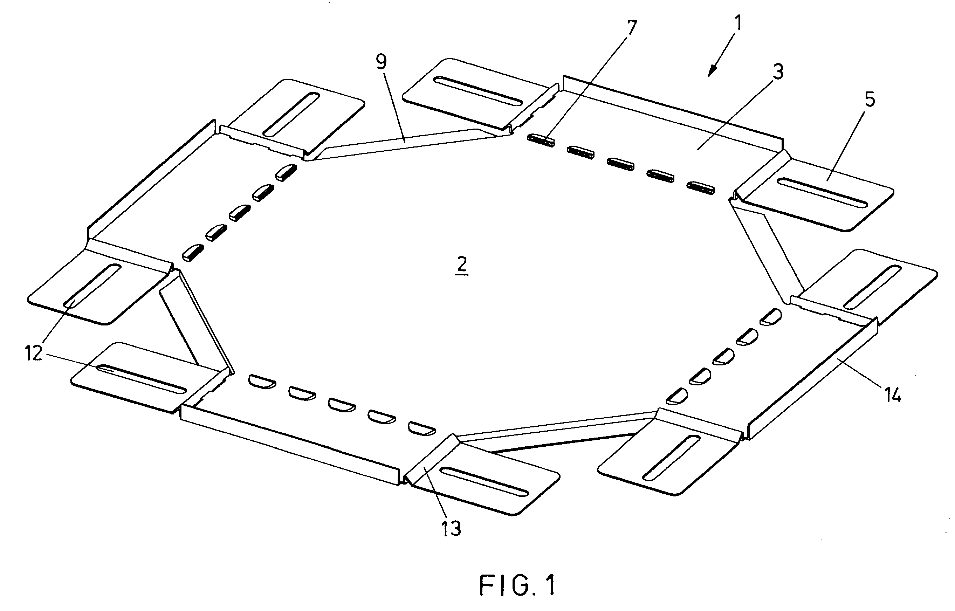

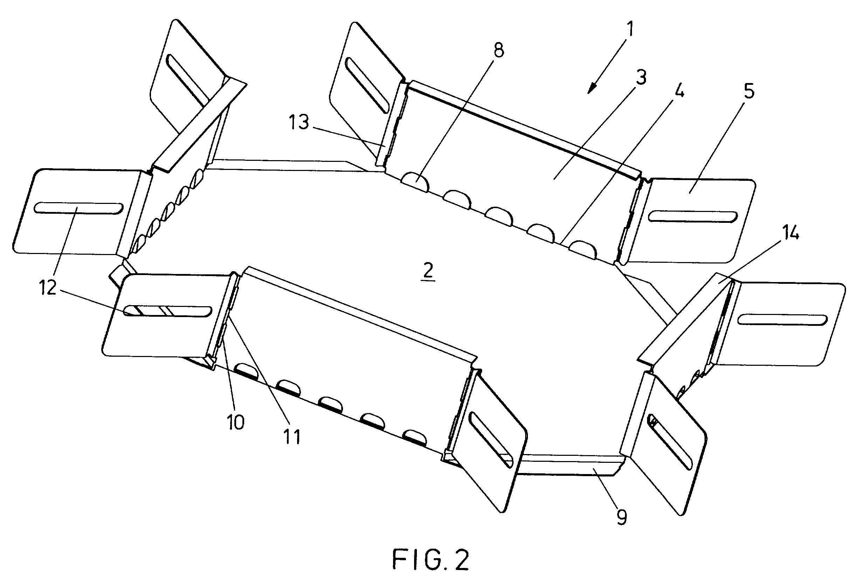

Fig. 1 gives a three-dimensional elevation of a four-way junction 1 according to the invention in the flat condition. The four-way junction 1 is manufactured from a single sheet. Thus, the loss of material is limited. The four-way junction 1 is substantially flat. In this manner the products can be properly stacked and occupy only a minimal amount of space during storage and transport from the factory to the site of assembly. This is in contrast with the known raceway systems, where only two straight raceway elements or raceway fittings can be slid into each other and the packaging space generally corresponds with the height of the sidewall multiplied by the surface area of the bottom surface. Provided on the bending lines 4 between the bottom surface 2 and the side surfaces 3 are weakened portions. By virtue of these weakened portions the side surfaces 3 of the flat four-way junction 1 are easy to bend manually into the position shown in Fig. 2. At the site of assembly all elements, such as the various fittings 1, 15, 17, and a raceway element, can simply be bent into the proper shape by the mechanic.

The weakened portions on the bending line 4 can consist of grooves or incisions (not shown) or perforations. Such perforations can for instance consist of narrow, elongate slots (not shown). By virtue of these weakened portions, the sidewalls are manually bent along a straight line 4. As shown in Fig. 1, the weakened portions in this four-way junction 1 are formed by cuts 7 on the bending line 4. The material 8 (see Fig. 2) located on one side adjacent to these cuts has been inwardly recessed. As a consequence, the side surfaces 3 can be bent through an angle of 90° at a maximum. By virtue of these inwardly recessed portions, a fitting 1 can be simply bent into the proper shape through the correct angle and the open cuts are sealed again in the bent condition. In the example shown here, the material 8 of the side surfaces 3 has been inwardly recessed; the same effect is achieved if the material 8 of the bottom surface 2 adjacent to the cuts 7 is recessed. Because these recessed portions 8 eventually butt against the bottom surface 2 or side surface 3, the side surface 3 can be bent through an angle of exactly 90°.

At the four points where a raceway element (not shown) can be coupled to the four-way junction 1, the bottom surface 2 comprises a lowered supporting edge 9. By virtue of this lowered supporting edge 9, the stiffness of the bottom surface, and hence of the entire four-way junction, is increased considerably. A raceway element to be connected is placed on this supporting edge 9, so that the bottom of a raceway element and the bottom surface 2 of the four-way junction 1 are flush with each other. In the raceway systems known heretofore, the raceway elements and the fittings are slid into each other, resulting in differences in height between the bottoms of the discrete elements.

The side surfaces 3 comprise a coupling surface 5 on at least one side. In the bent condition of the side surface 3, the coupling surfaces 5 are likewise bent at an angle of 90° relative to the bottom surface 2. Provided on the bending line 11 between the side surface 3 and the coupling surface 5 is a weakened portion. In this case, this is a perforation in the form of narrow, elongate slots 10. Of course, it is also possible here to provide a weakened portion in the form of a groove or incision (not shown). The coupling surfaces 5 can be simply bent along the bending line 11, so that they extend in line with a raceway element to be connected. When connecting a raceway element, the coupling surfaces 5 are slipped into the flanged edge of a raceway element. While connecting a raceway element and a fitting 1 to each other, they need not be supported at the point of coupling. Because the coupling surfaces 5 are bendable relative to the side surfaces 3, a raceway element can also be coupled to such a fitting 1, 15, 17 at a different angle from the usual one. The coupling surfaces 5 are provided with a slot 12. With the aid of a loose fastener, a raceway element can be secured to a four-way junction 1 at this point.

Adjacent and parallel to the bending or transition line 11 bounding side surface 3, the coupling surfaces 5 comprise an inwardly projecting recessed portion 13. As a consequence, the cables in the raceway are kept at some distance from the terminal edge of a raceway element coupled thereto and so they cannot be damaged by the often rough terminal edge of a sawn-off raceway element. In addition, the recessed portions 13 provide better guidance of the cables around the corner, which is especially important when pulling cables in the raceway.

Fig. 2 shows a three-dimensional elevation of a four-way junction 1 according to Fig. 1, with the side surfaces 3 disposed in the bent condition. The coupling surfaces 5 have also been bent 90° relative to the bottom surface 2 and have then been bent in the direction of a connectible raceway element.

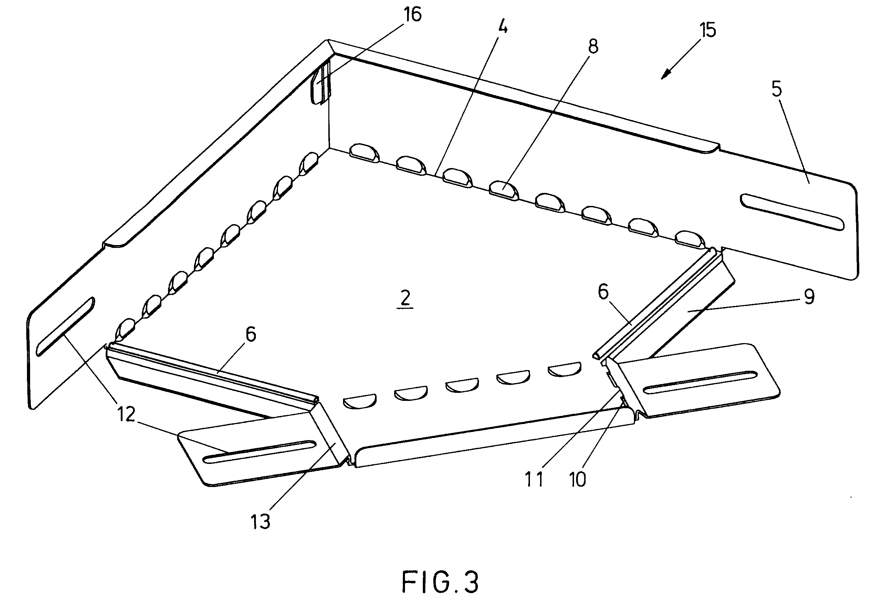

Fig. 3 shows a three-dimensional elevation of a corner piece 15 according to the invention. The two side surfaces 3, which, in the bent condition, butt against each other, have been connected together by means of a connection 16 the members of which can be snapped into each other. The other parts correspond with the four-way junction 1 according to Figs. 1 and 2 and have been provided with the same reference numerals. The third side surface 3 is shown in the unbent, flat position.

The bottom 2 can be provided with a raised portion or ridge 6 to keep the cables clear of any burrs which may be present on the sawn-off terminal end of a raceway element to be connected.

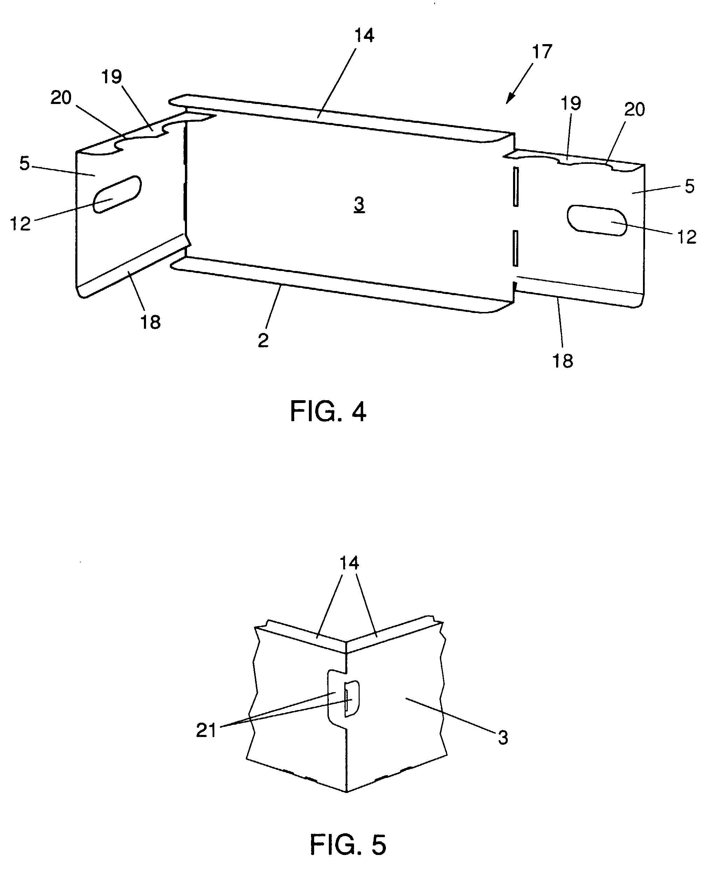

A variant of a connection for connecting together two side surfaces 3 which butt against each other in the bent condition, is shown in Fig. 5. The side surfaces are provided with bending lips which can be folded into each other for forming a joint 21. A narrow edge 14 of the side surfaces 3 is bent over 90° parallel to the bending line with the bottom surface, so as to form an upper edge in the bent condition.

Finally, Fig. 4 shows a fitting 17 for the raceway system according to the invention which serves as an end partition. The lower edge 18 of the coupling surface 5 of this end partition 17 is bent slightly and the upper edge 19 of the coupling surface 5 is bent 90°. This upper edge 19 fits into the flanged edge of a raceway element and is provided with a serration 20 so that the coupling surface 5 is clamped in the raceway element. Optionally, the lower edge 18 of the coupling surface 5 is also provided with a serration 20.

The invention is not limited to the fittings 1, 15, 17 shown in the drawing and a raceway element. Other fittings, such as T-pieces, extensions, adapters, drop adapters, etc. are also manufactured in one piece and substantially flat. By providing these fittings with a weakened portion, they are easy to bend manually to form a fitting. In other words, all parts of a raceway system can be manufactured in this way from a single sheet in a limited number of manufacturing steps.

In this way the products can be properly stacked and occupy only a mininal amount of space during storage and transport from the factory to the site of assembly. This is in contrast with the known raceway systems where only two straight raceway elements and some raceway fittings can be slid into each other and the packaging space generally corresponds with the height of the sidewall multiplied by the surface area of the bottom surface. At the site of assembly, the elements can easily be bent into the required shape by the mechanic.

The additional advantage of the raceway system according to the invention is that the fittings and the fitting lids are smaller.

## Claims

1. A raceway system composed of parts such as raceway elements and fittings for horizontal and vertical branches for accommodating cables, leads and the like, in which the parts (1, 15, 17) are manufactured from a single sheet and comprise at least one bottom surface (2) and at least one side surface (3) adjoining the bottom surface (2),
characterized in that the parts (1, 15, 17) are substantially flat and comprise a weakened portion on the bending line (4) between the bottom surface (2) and a side surface (3), so that the side surfaces (3) are manually bendable to form a raceway element or a fitting (1, 15, 17).

2. A raceway system according to claim 1, characterized in that the weakened portion is a groove or incision.

3. A raceway system according to claim 1, characterized in that the weakened portion consists of perforations.

4. A raceway system according to claim 3, characterized in that the perforations are narrow, elongate slots.

5. A raceway system according to claim 3, characterized in that the perforations are cuts (7) and the material (8) on one side adjacent a cut (7) is recessed.

6. A part intended as a fitting for horizontal and vertical branches of a raceway system according to one of the preceding claims 1-5, characterized in that the bottom surface (2) of the fitting (1, 15) is provided with a lowered supporting edge (9) at the points where, in the bent condition, a raceway element can be connected, the bottom surface (2) being provided with an inwardly projecting recess or ridge (6) adjacent and parallel to the lowered supporting edge (9).

7. A part intended as a fitting for horizontal and vertical branches of a raceway system according to any one of the preceding claims 1-5, characterized in that a side surface (3) is provided with at least one coupling surface (5), connected thereto by a weakened portion so as to make the coupling surface (5) manually bendable along a bending line (11), said weakened portion being a groove or incision or consisting of perforations (10) in the form of cuts, the material on one side of the cuts being recessed.

8. A part according to claim 7, characterized in that the coupling surfaces (5) are provided with an inwardly projecting recess (13) adjacent to and parallel to the bending or transition line (11) with the side surface (3).

9. A part according to any one of the claims 6-8, characterized in that a narrow edge (14) of the side surfaces (3) is bent over 90° parallel to the bending line (4) with the bottom surface (2), so as to form an upper edge (14) in the bent condition.

10. A part according to claim 9, characterized in that the edges of the side surfaces (3) which butt against each other in the bent condition are provided with a connection (16) which can be snapped into each other.

11. A part according to claim 9, characterized in that the edges of the side surfaces (3) which butt against each other in the bent condition are provided with a connection (21) which can be folded into each other.

12. A part intended as end partition for horizontal and vertical branches of a raceway system according to any one of the preceding claims 1-5, characterized in that the lower edge (18) of the coupling surfaces (5) is slightly bent and the upper edge (19) is bent over 90°.

13. A part according to claim 12, characterized in that the upper edge (19) and/or the lower edge (18) are provided with a serration (20).

## Patentansprüche

1. Kanalsystem bestehend aus Teilen wie Kanalelementen und Kupplungen für horizontale und vertikale Abzweigungen zum Unterbringen von Kabeln, Leitungen und dergleichen, bei dem die Teile (1, 15, 17) aus einer einzigen Platte hergestellt sind und wenigstens eine Bodenfläche (2) und wenigstens eine Seitenfläche (3) aufweisen, die an die Bodenfläche (2) angrenzt, dadurch gekennzeichnet, daß die Teile (1, 15, 17) im wesentlichen flach sind und einen abgeschwächten Teil an der Biegelinie (4) zwischen der Bodenfläche (2) und einer Seitenfläche (3) aufweisen, so daß die Seitenflächen (3) manuell biegbar sind, um ein Kanalelement oder eine Kupplung (1, 15, 17) zu bilden.

2. Kanalsystem nach Anspruch 1, dadurch gekennzeichnet, daß der abgeschwächte Teil eine Nut oder einen Einschnitt darstellt.

3. Kanalsystem nach Anspruch 1, dadurch gekennzeichnet, daß der abgeschwächte Teil aus Perforationen besteht.

4. Kanalsystem nach Anspruch 3, dadurch gekennzeichnet, daß die Perforationen enge, längliche Schlitze darstellen.

5. Kanalsystem nach Anspruch 3, dadurch gekennzeichnet, daß die Perforationen Einschnitte (7) darstellen und das Material (8) auf einer Seite angrenzend an einen Einschnitt (7) Aussparungen aufweist.

6. Teil, der als eine Kupplung für horizontale und vertikale Abzweigungen eines Kanalsystems nach einem der vorangegangenen Ansprüche 1-5 vorgesehen ist, dadurch gekennzeichnet, daß die Bodenfläche (2) der Kupplung (1, 15) mit einer abgesenkten Auflagekante (9) an den Punkten versehen ist, wo im gebogenen Zustand ein Kanalelement angeschlossen werden kann, wobei die Bodenfläche (2) angrenzend an und parallel zu der abgesenkten Auflagekante (9) mit einer nach innen vorspringenden Aussparung oder Furche (6) versehen ist.

7. Teil, der als eine Kupplung für horizontale und vertikale Abzweigungen eines Kabelsystems nach einem der vorangegangenen Ansprüche 1-5 vorgesehen ist, dadurch gekennzeichnet, daß eine Seitenfläche (3) mit wenigstens einer Kupplungsoberfläche (5) versehen ist, die mit derselben durch einen abgeschwächten Teil verbunden ist, um so die Kupplungsoberfläche (5) manuell entlang einer Biegelinie (11) verbiegbar zu machen, wobei der abgeschwächte Teil eine Nut oder einen Einschnitt darstellt oder aus Perforationen (10) in Form von Einschnitten besteht, wobei das Material auf einer Seite der Einschnitte Aussparungen aufweist.

8. Teil nach Anspruch 7, dadurch gekennzeichnet, daß die Kupplungsoberflächen (5) mit einer nach innen vorspringenden Aussparung (13) angrenzend an und parallel zu der Biege- oder Übergangslinie (11) mit der Seitenfläche (3) versehen sind.

9. Teil nach einem der Ansprüche 6-8, dadurch gekennzeichnet, daß eine schmale Kante (14) der Seitenflächen (3) über 90° parallel zu der Biegelinie (4) mit der Bodenfläche (2) gebogen ist, um so eine obere Kante (14) im gebogenen Zustand zu bilden.

10. Teil nach Anspruch 9, dadurch gekennzeichnet, daß die Kanten der Seitenflächen (3), die im gebogenen Zustand aneinanderstoßen, mit einer Verbindung (16) versehen sind, die ineinander eingeschnappt werden kann.

11. Teil nach Anspruch 9, dadurch gekennzeichnet, daß die Kanten der Seitenflächen (3), die im gebogenen Zustand aneinanderstoßen, mit einer Verbindung (21) versehen sind, die ineinander gefaltet werden kann.

12. Teil, der als eine Abschlußwand für horizontale und vertikale Abzweigungen eines Kanalsystems nach einem der vorangegangenen Ansprüche 1-5 vorgesehen ist, dadurch gekennzeichnet, daß die untere Auflagekante (18) der Kupplungsoberflächen (5) etwas gebogen ist und die obere Kante (19) über 90° gebogen ist.

13. Teil nach Anspruch 12, dadurch gekennzeichnet, daß die obere Kante (19) und/oder untere Kante (18) mit einer Verzahnung (20) versehen sind.

## Revendications

1. Système de conduite de câble constitué de pièces telles que des éléments de conduite et des raccords pour des ramifications horizontales et verticales afin de loger les câbles des conducteurs et analogues, dans lequel les pièces (1, 15, 17) sont fabriquées à partir d'une feuille unique et comprennent au moins une surface inférieure (2) et au moins une surface latérale (3) reliée à la surface inférieure (2),
caractérisé en ce que les pièces (1, 15, 17) sont sensiblement planes et comprennent une partie affaiblie sur la ligne de pliage (4) entre la surface inférieure (2) et une surface latérale (3), de manière que les surfaces latérales (3) soient repliables manuellement pour former un élément de conduite ou un raccord (1, 15, 17).

2. Système de conduite selon la revendication 1, caractérisé en ce que la partie affaiblie est une rainure ou une incision.

3. Système de conduite selon la revendication 1, caractérisé en ce que la partie affaiblie consiste en des perforations.

4. Système de conduite selon la revendication 3, caractérisé en ce que les perforations sont des fentes étroites allongées.

5. Système de conduite selon la revendication 3, caractérisé en ce que les perforations sont des découpures (7) et le matériau (8) se trouvant sur un côté adjacent à une découpure (7) est creusée.

6. Pièce destinée à servir de raccord pour des ramifications horizontales et verticales d'un système de conduite selon l'une des revendications 1 à 5 précédentes, caractérisée en ce que la surface inférieure (2) du raccord (1, 15) est pourvue d'un bord de support (9) abaissé aux points où, à l'état plié, un élément de conduite peut être relié, la surface inférieure (2) étant pourvue d'une cavité ou nervure (6) saillant vers l'intérieur, voisine, et parallèle aux bords de support (9) abaissés.

7. Pièce destinée à servir de raccord pour des ramifications horizontales et verticales d'un système de conduite selon l'une quelconque des revendications 1 à 5 précédentes, caractérisée en ce qu'une surface latérale (3) est pourvue d'au moins une surface de couplage (5), lui étant couplée par une partie affaiblie, de manière à faire rendre la surface de couplage (5) pliable manuellement le long d'une ligne de pliage (11), ladite partie affaiblie étant une rainure ou incision, ou consistant en des perforations (10) se présentant sous la forme de découpures, le matériau se trouvant d'un côté des découpures étant creusé.

8. Pièce selon la revendication 7, caractérisée en ce que les surfaces de couplage (5) sont pourvues d'une cavité (13) saillant vers l'intérieur, voisine et parallèle à la ligne de pliage ou transition (11) avec la surface latérale (3).

9. Pièce selon l'une quelconque des revendications 6 à 8, caractérisée en ce qu'un bord étroit (14) des surfaces latérales (3) est plié en formant un angle de 90 degrés parallèlement à la ligne de pliage (4), avec la surface inférieure (2), de manière à former un bord supérieur (14) à l'état plié.

10. Pièce selon la revendication 9, caractérisée en ce que les bords des surfaces latérales (3) qui butent l'une contre l'autre à l'état plié sont pourvues de liaisons (16) qui peuvent être encliquetées l'une dans l'autre.

11. Pièce selon la revendication 9, caractérisée en ce que les bords des surfaces latérales (3) qui butent l'un contre l'autre à l'état plié, sont pourvus de liaisons (21) qui peuvent être pliées l'une dans l'autre.

12. Pièce destinée à servir de cloison d'extrémité pour des ramifications horizontales et verticales d'un système de conduite selon l'une quelconque des revendications 1 à 5 précédentes, caractérisée en ce que le bord inférieur (18) des surfaces de couplage (5) est légèrement replié et le bord supérieur (19) est replié de plus de 90°.

13. Pièce selon la revendication 12, caractérisée en ce que le bord supérieur (19) et/ou le bord inférieur (18) sont pourvus d'une dentelure (20).
